# EUROPÄISCHE PATENTSCHRIFT

(11) **EP 0 475 549 B1**
(45) Veröffentlichungstag und Bekanntmachung des Hinweises auf die Patenterteilung: **04.08.1993**
(21) Anmeldenummer: 91250243.2
(22) Anmeldetag: 02.09.1991
(51) Int. Cl.: C03B 19/06

(54) **Verfahren zur Herstellung von Erzeugnissen mit hohem SiO2-Gehalt**
Method of making articles of high silica content
Procédé de fabrication des produits à haute teneur en silice

(30) Priorität: 03.09.1990 DD 343780
(43) Veröffentlichungstag der Anmeldung: 18.03.1992
(73) Patentinhaber: UNIVERSAL QUARZGUT SCHMELZE GmbH, 13089 Berlin (DE)
(72) Erfinder: Lindenfelser, Bernd, O-1115 Berlin (DE); Hoh, Daniela, O-1120 Berlin (DE)
(74) Vertreter: Kruspig, Volkmar, Dipl.-Ing.

(56) Entgegenhaltungen:
- CH-A- 205 106
- DE-A- 2 218 766
- DE-A- 3 511 452
- DE-C- 698 097
- PATENT ABSTRACTS OF JAPAN vol. 13, no. 158 (C-586)(3506) 17. April 1989 & JP-A-63 315 538 ( NIPPON SHEET GLASS CO.LTD. ) 23. Dezember 1988

## Beschreibung

Die Erfindung betrifft ein Verfahren zur Herstellung von Erzeugnissen mit einem SiO₂-Gehalt von größer 98% nach dem Oberbegriff des Patentanspruches, wobei die verwendete Formmasse in technologisch vorteilhafter Weise die Ausbildung besonders komplizierter räumlich-geometrischer Strukturen hoher Maßhaltigkeit gestattet.

Es ist bekannt, glaskeramische Erzeugnisse hoher Maßhaltigkeit und komplizierter geometrischer Struktur mittels Schlickergießen herzustellen. Bei der Anwendung des Schlickergießens treten im Produktionsprozeß hohe Standzeiten des Erzeugnisses in der Gipsform, bedingt durch die Herausbildung der gewünschten Scherbendicke, ein hoher Feuchtegehalt und daraus resultierend eine erhebliche Trockenzeit sowie ein starker Schwund der Erzeugnisse mit entsprechenden negativen Auswirkungen auf deren Maßhaltigkeit auf.

Gemäß der Lehre der DE-OS 22 18 766 wird ein Verfahren zur Herstellung von beispielsweise dünnwandigen Tiegeln aus Quarzglas hoher Dichte oder anderer Präzisionsgegenstände offenbart, wobei ein im bekannten Schlickerguß hergestellter Tiegel in einem speziellen Verfahren nach Lufttrocknung anschließend einem Sinterprozeß unterzogen wird. Die durchschnittliche Partikelgröße des gepulverten Quarzglases beträgt hierbei ca. 2 bis 4 µm.
Der Schlicker wird nach DE-OS 22 18 766 in eine Gipsform eingebracht, welche gegebenenfalls mit einer inneren Graphit-Schutzschicht zur Vermeidung von Verunreinigungen durch die Form versehen ist. Nachteilig sind die mit dem Einsatz sehr feiner Glaspulver hoher Reinheit verbundenen hohen Kosten des Verfahrens sowie der hohe erforderliche Feuchtegehalt der Formmasse mit den sich daraus ergebenden o.g. Problemen für den folgenden Verfahrensablauf und die Erzeugnisqualität. Mit der in der DE-OS 22 18 766 vorgeschlagenen Lösung ergeben sich auf Grund des Trocknungsprozesses zusätzliche Probleme, wenn Körper oder Gegenstände größerer Wandstärke hergestellt werden sollen.
Mit dem ebenfalls bekannten Verfahren des Pressens, welches beispielsweise aus der DE 35 11 452 A1 bekannt ist, werden die genannten Nachteile des Schlickergießens teilweise beseitigt, jedoch ermöglicht der Preßvorgang nur ein begrenzt kompliziert geformtes Erzeugnis, insbesondere dann, wenn hinterschnittene Hohlräume zu bilden sind. Preßverfahren werden deshalb vorwiegend zur Ausbildung von Rohren, Strangmaterial oder ähnlichen Produkten angewendet, da insbesondere bei der Herstellung von in sich geschlossenen, kompliziert geformten Körpern eine ausreichende zufriedenstellende Ausbreitung der keramischen Masse unter üblichen Preßkraftverhältnissen nicht gegeben ist.

Zur Verbesserung der Verarbeitbarkeit der plastischen Massen mit SiO₂-Glaspulvern und der Verringerung der notwendigen Preßkräfte, wird in der zitierten DE 35 11 452 A1 vorgeschlagen, die plastische Masse unter Ausnutzung des Thixotropieeffektes durch Einkopplung mechanischer Kräfte, vorzugweise mittels Ultraschalleinwirkung, in einen Zustand erniedrigter Viskosität zu überführen und in diesem Zustand zu verpressen.

Hierdurch kann zwar die erforderliche Presskraft gesenkt werden, jedoch führt der Einsatz bzw. die Verwendung von SiO₂-Materialien relativ unabhängig von der Preßkraft zu einem hohen Abrieb und Verschleiß der Presswerkzeuge, so daß erhebliche zusätzliche stückzahlabhängige Kosten entstehen.

Das Ziel der Erfindung besteht in der Schaffung eines Verfahrens zur Herstellung von Erzeugnissen mit einem SiO₂-Gehalt größer 98%, welche eine hohe Maßhaltigkeit bei gleichzeitiger komplizierter räumlich-geometrischer Struktur aufweisen. Gleichzeitig soll mit der Angabe der verwendeten Formmasse eine für Quarzglas und -gut typische Eigenschaftsspezifikation, wie z.B. hohe Temperaturwechselbeständigkeit bei plötzlichen Temperaturschwankungen von 1100°C bis Raumtemperatur, thermische Dauerbelastbarkeit bis 1400°C, elektrische Isolationsfestigkeit und chemische Beständigkeit gegen Säuren erreicht werden.

Aufgabe der Erfindung ist daher die Angabe eines Verfahrens zur Herstellung von Erzeugnissen mit einem SiO₂-Gehalt größer 98%, wobei durch eine spezielle plastische, hochdichte Formmasse eine hohe Maßhaltigkeit kompliziert geformter Erzeugnisse möglich sein soll.

Erfindungsgemäß wird zunächst ein Gemenge aus einem amorphen SiO₂ verschiedener Korngrößenfraktionen in einem Korngrößenbereich von > 63 µm bis 3mm, wobei dieses Gemenge mindestens eine Fraktion im Bereich von > 0,4 mm bis 3mm von 10 bis 25 Masse-% sowie eine Fraktion im Bereich von > 63 µm bis 0,4 mm von 25 bis 40 Masse-% aufweist, bereitgestellt. Anschließend erfolgt ein homogenes Vermischen mit 42 bis 56 Masse-% eines aufgemahlenen Quarzglasschlickers einer Dichte von 1,72 bis 1,82 g/cm³. Nach erfolgter Homogenisierung wird die entstandene plastische Masse unter Vibration zum teilweisen Feuchtigkeitsentzug in bekannter Weise in eine vorbehandelte Gipsform eingefüllt und einer mehrstündigen Standzeit unterzogen, anschließend nach Entfernung der vorbehandelten Gipsform luftgetrocknet und gesintert.

Mittels der Erfindung kann in kostengünstiger Weise die Herstellung kompliziert geformter Erzeugnisse mit einem SiO₂-Gehalt größer 98%, wie z.B. von Gießstrahlschutzrohren, Tauchausgüssen, Dosiergefäßen, Tiegeln, Kugeln und anderen Formstücken erfolgen.

Die Erfindung soll anhand eines nachstehend beschriebenen Beispiels näher erläutert werden.

Für die Herstellung von z.B. mit trapezförmigen Innengewinden hoher Maßhaltigkeit versehenen Speiserkugeln großen Durchmessers aus Vollmaterial wird ein Gemenge aus Quarzglasschlicker und Quarzglasgranulaten hergestellt. Die Dichte des Schlickers, welcher nach einem bestimmten Aufmahlprozeß hergestellt wurde, beträgt 1,72 bis 1,82 g/cm³. Für die Herstellung der Formmasse werden 10 bis 25 Masse-% eines Quarzglasgranulates mit einer Korngröße von 0,4 bis 3 mm und 25 bis 40 Masse-% eines weiteren Quarzglasgranulates mit einer Korngröße von 63 µm bis 0,4 mm unter Zugabe von 42 bis 56 Masse-% Quarzglasschlicker homogen vermischt. Es sei hier angemerkt, daß sich die erwähnten Masse-%-Angaben auf die Gesamtmasse der Formmasse beziehen.

Anschließend wird die homogene Quarzglasformmasse mit Hilfe eines Vibrators in eine vorbehandelte Gipsform eingerüttelt. Nach einer mehrstündigen Standzeit, meist 2 bis 3 h, kann die mit hinterschnittenem Innengewinde versehene Kugel aus der Gipsform entnommen werden. Die anschließende Lufttrocknung des Rohlings beträgt je nach Dicke bzw. Durchmesser des Erzeugnisses 24 Stunden bis 8 Tage. Die Umgebungstemperatur sollte dabei 28 bis 35°C betragen.
Bei einem anschließenden Sinterprozeß wird der Formling bei kleiner/gleich 1250 °C dichtgesintert. Die Haltezeit beträgt in Abhängigkeit von der Dicke bzw. dem Durchmesser des Formlings, in diesem Falle der Kugel, 2 bis 6 Stunden.

Das Aufheizregime der Sinteröfen bis zum Erreichen der 1250 °C Sintertemperatur beträgt je nach Kugeldurchmesser 10 bis 24 Stunden.

Auf die o.g. Weise sind reproduzierbar vollwandige Speiserkugeln mit einem Durchmesser von bis zu 200 mm herstellbar, wobei das Problem der Trocknungs- und Spannungsrißfestigkeit durch die spezielle hochdichte Formmasse gelöst ist.

Durch die erzielte Oberflächenbeschaffenheit der Kugel in Verbindung mit einer geringen Porosität wird Entgasungserscheinungen beim erstmaligen Einsatz der Speiserkugeln vorgebeugt.

## Patentansprüche

1. Verfahren zur Herstellung von Erzeugnissen mit einem SiO₂-Gehalt von größer 98% durch Sinterung von nach dem Schlickergußverfahren geformten Gegenständen,
**dadurch gekennzeichnet,**
daß zunächst ein Gemenge aus einem amorphen SiO₂, wie Quarzglas- oder Quarzgutgranulat verschiedener Korngrößenfraktionen in einem Korngrößenbereich von größer 63 µm bis 3 mm bereitgestellt wird, wobei dieses Gemenge mindestens eine Fraktion im Korngrößenbereich von größer 0,4 mm bis 3 mm von 10 bis 25 Masse-% sowie eine Fraktion im Korngrößenbereich von größer 63 µm bis 0,4 mm von 25 bis 40 Masse-% umfaßt, anschließend ein homogenes Vermischen mit 42 bis 56 Masse-% eines aufgemahlenen Quarzglasschlickers einer Dichte von 1,72 bis 1,82 g/cm³ erfolgt und wobei die Masse-%-Angaben sich auf die Gesamtmasse der Formmasse beziehen; nach erfolgter Homogenisierung die entstandene plastische Masse unter Vibration in bekannter Weise in eine vorbehandelte Gipsform eingefüllt und einer Standzeit unterzogen wird, sowie nach Entfernung der vorbehandelten Gipsform eine Lufttrocknung und die Sinterung erfolgt.

## Claims

1. A method for the manufacture of products having a SiO₂-content of greater than 98% by sintering objects moulded by means of the slip casting method,
**characterized in that,**
a mixture of an amorphous SiO₂, such as quartz glass- or quartz ware granulated material of various grain size fractions is firstly prepared with a grain size range of greater than 63 µm to 3 mm, wherein this mixture comprises at least one fraction in the grain size range of greater than 0.4 mm to 3 mm of 10 to 25% by mass and a fraction in the grain size range of greater than 63 µm to 0.4 mm of 25 to 40% by mass, a homogeneous mixture is then made with 42 to 56% by mass of a ground quartz glass slip of density 1.72 to 1.82 g/cm³, and wherein the mass percentage information relates to the total mass of the molding material; after homogenisation, the resulting plastic material is poured into a pre-treated plaster mould under vibration in known manner, and is left to stand for a period of time, and after the pre-treated plaster mould has been removed air drying and sintering takes place.

## Revendications

1. Procédé pour la fabrication de produits présentant une teneur en SiO₂ supérieure à 98 % par frittage d'objets moulés selon le procédé de la coulée en barbotine, caractérisé en ce que tout d'abord, il est préparé un mélange à partir de SiO₂ amorphe, comme du verre quartzeux en granulé ou de la silice vitreuse en granulé de différentes fractions de grosseurs de grains dans une plage de granulométrie supérieure à 63 µm jusqu'à 3 mm, ce mélange comprenant ici au moins une fraction dans la plage de granulométrie supérieure à 0,4 mm jusqu'à 3 mm représentant 10 à 25 % de la masse ainsi qu'une fraction dans la plage de granulométrie supérieure à 63 µm jusqu'à 0,4 mm représentant 25 à 40 % de la masse, qu'ensuite est effectué un mélange homogène avec 42 à 56 % de la masse d'une barbotine pulvérisée de verre quartzeux d'une densité de 1,72 à 1,82 g/cm³, les données en % de masse se référant à la masse totale de la matière moulable, qu'après avoir effectué l'homogénéisation, la matière plastique obtenue est introduite par vibration, de manière connue, dans un moule en plâtre prétraité et est soumise à un temps de repos et, en ce qu'après retrait du moule en plâtre prétraité, on procède au séchage à l'air et au frittage.
